# EUROPÄISCHE PATENTSCHRIFT

(11) **EP 3 263 321 B1**
(45) Veröffentlichungstag und Bekanntmachung des Hinweises auf die Patenterteilung: **28.07.2021**
(21) Anmeldenummer: 16176980.7
(22) Anmeldetag: 29.06.2016
(51) Int. Cl.: B29D 24/00, B29C 70/08, B29C 70/24, B32B 5/24, B32B 27/06, B32B 27/28, B32B 27/30, B32B 27/34, B32B 27/36, B29C 70/68, B32B 5/18, B32B 7/04, B32B 27/32, B29K 105/04, B29K 101/12, B29C 44/56

(54) **VERFAHREN ZUR HERSTELLUNG EINES SANDWICH-PANEELS MIT EINEM VERSTÄRKTEN SCHAUMSTOFFKERN**
METHOD FOR PRODUCING A SANDWICH PANEL WITH A REINFORCED SPECIAL PLASTIC FOAM CORE
PROCEDE DE PRODUCTION D'UN PANNEAU SANDWICH COMPRENANT DES NOYAUX EN MOUSSE RENFORCEE

(43) Veröffentlichungstag der Anmeldung: 03.01.2018
(73) Patentinhaber: Airbus Defence and Space GmbH, 82024 Taufkirchen (DE)
(72) Erfinder: Orth, Tilman, 80469 München (DE); Grünewald, Jonas, 81547 München (DE); Parlevliet, Patricia, 81539 München (DE)
(74) Vertreter: Isarpatent

(56) Entgegenhaltungen:
- WO-A1-97/16303
- WO-A1-2007/012353
- WO-A1-2011/012587
- WO-A1-2015/090574
- DE-A1- 4 323 590
- DE-A1-102005 024 408
- US-A- 5 096 526
- US-A- 5 800 749
- US-A1- 2001 031 350
- US-A1- 2010 255 251

## Beschreibung

Die vorliegende Erfindung betrifft ein Verfahren zur Herstellung von Sandwich-Paneelen mit verstärkten Schaumstoffkernen.

Obwohl in vielfältigen Anwendungen verwendbar, werden die vorliegende Erfindung sowie die ihr zugrunde liegende Problematik in Bezug auf Sandwich-Paneele erläutert, welche zur Verkleidung von Passagierkabinen von Luftfahrzeugen ausgebildet sind. Prinzipiell ist die vorliegende Erfindung jedoch auch beispielsweise zur Herstellung von Paneelen für den Einbau in allgemeinen Fahrzeugen, wie Straßenfahrzeugen, Schienenfahrzeugen und/oder Wasserfahrzeugen oder dergleichen, in Gebäuden etc., verwendbar. Erfindungsgemäß hergestellte Paneele können als Fußbodenplatten, als Verkleidungs- oder Abdeckungsplatten sowie in der allgemeinen Gestaltung von Innenräumen eingesetzt werden.

Aufgrund ihres guten Verhältnisses von Steifigkeit bzw. Festigkeit zur Dichte finden im Bereich des Flugzeugbaus Sandwichstrukturen bzw. Sandwichbauteile, im Folgenden allgemein als Sandwich-Paneele bezeichnet, einen breiten Anwendungsbereich . Sandwich-Paneele bestehen typischerweise aus einer leichtgewichtigen inneren Kernstruktur, welche beidseitig von einer Deckschicht eingeschlossen wird. Durch geeignete Ausbildung der Kernstruktur kann sowohl die Steifigkeit solcher Paneele als auch weitere Eigenschaften wie die akustische oder die thermische Isolation eingestellt werden.

Die Deckschichten werden typischerweise aus einem Faserverbundmaterial gefertigt, z.B. kohlenstofffaserverstärkter Kunststoff (CFK). Die Kernstruktur kann beispielsweise wabenartig mit einer Vielzahl von Zellen mit hexagonalem Querschnitt aufgebaut sein. Die Zellwände der Waben können hierbei aus einem mit Phenolharz imprägnierten Faserpapier oder anderen Materialien wie Karton, Kunststoff etc. gebildet werden. Alternativ zu einem solchen Wabenaufbau kommen häufig Hartschaumstoffe zum Einsatz. Diese weisen unter anderem im Bereich thermischer und akustischer Isolation sowie bei der Bauteilherstellung Vorteile gegenüber Wabenstrukturen auf. Um auch ausreichende mechanischen Eigenschaften von schaumbasierten Kernverbunden gegenüber Kernverbunden mit einer wabenartigen Kernstruktur vergleichbarer Dichte sicherzustellen, werden mitunter Techniken eingesetzt, mit denen verstärkende Pins, Fasern oder Fäden oder dergleichen in Hartschaumbauteile eingebracht werden. So wird in der so genannten "Tied-Foam-Core"-Technik, wie sie beispielsweise in der Druckschrift DE 10 2005 024 408 A1 beschrieben ist, ein Schaumstoff mit ,trockenen' Faserbündeln mittels einer Nähtechnik durchzogen. Nach einem Harzinfiltrationsprozess und einem anschließenden Aushärtungsprozess bilden die Faserbündel rigide Pins, welche zur mechanischen Verstärkung des Schaumstoffs beitragen.

Derartige bekannte Verfahren zur Verstärkung von Schaumstoffkernen sind jedoch üblicherweise lediglich zur Verstärkung von geschäumten duromeren Polymeren geeignet. Würden hingegen Fasern entsprechend in einen thermoplastischen Schaumstoff eingebracht, so würde eine anschließende Infiltration der Fasern mit einem thermoplastischen Infusionsmaterial aufgrund der hohen Viskosität von thermoplastischen Kunststoffen praktisch schwierig zu realisieren sein. Schäume aus thermoplastischen Polymeren weisen allerdings den Vorteil auf, dass diese unter Druck und Temperatur praktisch beliebig verformt werden können und in kurzen Zykluszeiten mit thermoplastischen Decklagen zusammengefügt werden können.

Die Druckschriften WO 2007/012353 A1 und WO 2011/012587 A1 offenbaren Verfahren zur Fertigung von Sandwich-Paneelen mit armierten Kernverbundstrukturen.

DE 10 2005 024 408 A1 offenbart ein Sandwich-Paneel gemäß dem Oberbegriff des Anspruchs 15.

Vor diesem Hintergrund besteht somit ein Bedarf nach einfachen und schnellen Lösungen zur Bildung von Sandwich-Paneelen mit verstärkten Schaumstoffkernen aus einem thermoplastischen Kunststoff.

Erfindungsgemäß wird diese Aufgabe gelöst durch ein Verfahren mit den Merkmalen des Patentanspruchs 1 und ein Sandwich-Paneel mit den Merkmalen des Patentanspruchs 15.

Demgemäß ist ein Verfahren zur Herstellung eines Sandwich-Paneels mit einem verstärkten Schaumstoffkern vorgesehen. Das Verfahren umfasst Einbringen einer Vielzahl von stabförmigen, thermoplastischen Verstärkungselementen in einen thermoplastischen Schaumwerkstoff derart, dass sich die Verstärkungselemente von einer ersten Deckfläche des Schaumwerkstoffs durch den Schaumwerkstoff hindurch zu einer zweiten Deckfläche des Schaumwerkstoffs erstrecken. Hierbei ragen Endbereiche der Verstärkungselemente aus der ersten Deckfläche und der zweiten Deckfläche heraus. Das Verfahren umfasst ferner Thermoformen des Schaumwerkstoffs mit den Verstärkungselementen zu einem verstärkten Schaumstoffkern. Hierbei werden die Endbereiche der Verstärkungselemente durch Beaufschlagung von Temperatur und Druck an die Deckflächen des Schaumwerkstoffs angeformt und in einer Schmelzverbindung mit dem Schaumwerkstoff stoffschlüssig verbunden. Das Verfahren umfasst darüber hinaus beidseitiges Laminieren jeweils einer thermoplastischen Deckschicht unter Beaufschlagung von Temperatur und Druck auf den verstärkten Schaumstoffkern an den Deckflächen des Schaumwerkstoffs zur Bildung des Sandwich-Paneels. Hierbei werden die Deckschichten in einer Schmelzverbindung stoffschlüssig mit dem verstärkten Schaumstoffkern verbunden.

Ferner ist ein Sandwich-Paneel vorgesehen. Das Sandwich-Paneel umfasst einen thermoplastischen Schaumwerkstoff; eine Vielzahl von stabförmigen, thermoplastischen Verstärkungselementen, welche in den thermoplastischen Schaumwerkstoff eingebracht sind, wobei sich die Verstärkungselemente von einer ersten Deckfläche des Schaumwerkstoffs durch den Schaumwerkstoff hindurch zu einer zweiten Deckfläche des Schaumwerkstoffs erstrecken; und jeweils eine thermoplastische Deckschicht beidseitig des verstärkten Schaumstoffkerns. Das Sandwich-Paneel ist dadurch gekennzeichnet, dass Endbereiche der Verstärkungselemente an die Deckflächen des Schaumwerkstoffs angeformt und in einer Schmelzverbindung mit dem Schaumwerkstoff stoffschlüssig verbunden sind, sodass der Schaumwerkstoff mit den Verstärkungselementen einen verstärkten Schaumstoffkern bildet, und dass die Deckschichten an den Deckflächen des Schaumwerkstoffs auf den verstärkten Schaumstoffkern laminiert und in einer Schmelzverbindung stoffschlüssig mit dem verstärkten Schaumstoffkern verbunden sind.

Die der vorliegenden Erfindung zugrunde liegende Idee besteht darin, Sandwich-Paneele aus thermoplastischen Komponenten zu bilden, indem sowohl Decklagen als auch stabförmige Verstärkungselemente über eine Schmelzverbindung mit einem Schaumstoffwerkstoff stoffschlüssig verbunden werden. In dieser Weise können die mechanischen Eigenschaften von Sandwichbauteilen mit einem Kern aus thermoplastischen Schäumen signifikant verbessert werden, so dass diese entsprechend zu Sandwich-Bauteilen mit einem duromeren Schaumstoffkern oder einem Kern mit Wabenstruktur bei Anwendungen mit großen Belastungen einsetzbar sind. Durch die Verbindung der Deckschichten, des Schaumwerkstoffs und der Verstärkungselemente wird vorteilhafterweise eine Kraftübertragung zwischen allen drei Komponenten erreicht. Hierbei macht sich die vorliegende Erfindung zunutze, dass alle drei Komponenten auf Molekularebene mischbar sind und eine Schmelzfügung realisierbar ist, d.h. eine stoffschlüssige Verbindung entsteht. Auf Hilfsmittel wie Klebefilme oder eine Infiltration mit Kunstharz oder dergleichen kann somit verzichtet werden.

Thermoplastische Schaumwerkstoffe bieten erhebliche Vorteile hinsichtlich ihrer Verarbeitungseigenschaften gegenüber duromeren Schaumwerkstoffen und sind deutlich einfacher herzustellen und zu bearbeiten. Erfindungsgemäße Sandwich-Paneele sind somit schneller, einfacher, effizienter und letztendlich kostengünstiger in der Herstellung als herkömmliche Sandwich-Paneele, beispielsweise solche mit einem duromeren Schaumstoffkern. Gleichzeitig bieten erfindungsgemäße Sandwich-Paneele jedoch vergleichbare mechanische Kennwerte wie typische duromere Sandwich-Paneele.

Auf Basis des erfindungsgemäßen Verfahrens können Schaumstoffkerne schnell und unkompliziert verstärkt werden. Hierzu müssen lediglich entsprechende Verstärkungselemente, z.B. Pins oder dergleichen, an geeigneten Positionen in den Schaumwerkstoff eingebracht werden, z.B. an Lasteinleitungspunkten. Die stabförmigen Verstärkungselemente werden hierbei derart dimensioniert und derartig angeordnet, dass beide Enden der Verstärkungselemente aus dem Schaumwerkstoff herausragen. Anschließend werden die Verstärkungselemente zusammen mit dem Schaumwerkstoff umgeformt und verbunden. Hierbei werden die herausragenden Enden der stabförmigen Verstärkungselemente aufgeschmolzen und unter Druck in die Oberfläche der Schaumstruktur gepresst. Hierbei wird letztendlich die Oberfläche des Schaumwerkstoffs zusätzlich durch aufgeschmolzenes Material angereichert, wodurch die Verbindung zu den Deckschichten während des Fügevorgangs weiter verbesserbar ist. Je nach Anwendung bzw, Anforderungen des fertigen Sandwich-Paneels können die Verstärkungselemente gleichmäßig in dem Schaumwerkstoff verteilt werden. Alternativ ist es natürlich ebenso möglich, in lokalen Bereichen des Schaumwerkstoffs eine höhere Anzahl von Verstärkungselementen vorzusehen, um beispielsweise bestimmte Bereiche des Sandwich-Paneels besonders zu verstärken. In entsprechender Weise können auch nicht verstärkte Bereiche in dem Schaumstoffkern vorgesehen sein. Dem Fachmann wird sich auf Basis der vorliegenden Lehren unmittelbar erschließen, dass sowohl die spezifische Versteilung und Konfiguration der Verstärkungselemente in dem Schaumwerkstoff als auch der Schaumwerkstoff und die Deckschichten selber je nach Anwendung gezielt konfigurierbar und optimierbar sind. In Weiterbildungen können die Verstärkungselemente beispielsweise unter unterschiedlichen Winkeln in den Kern eingebracht werden, z.B. unter Einbringungswinkeln zwischen 0° und etwa 75°. Dadurch kann das Bauteil der vorwiegenden Belastungsrichtung angepasst werden. Ein Winkel von 0° hat beispielsweise Vorteile bei Druckbelastungen, während ein 45° Winkel vorteilhaft bei Belastungen unter Schub ist. Es können jedoch auch unterschiedlich orientierte Verstärkungselemente eingebracht werden, z.B. 0° an Krafteinleitungsstellen und sonst 45° etc.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann das Verfahren weiterhin das Formen einer Vielzahl von Durchgangslöchern in dem Schaumwerkstoff umfassen, welche sich von der ersten Deckfläche des Schaumwerkstoffs zu der zweiten Deckfläche des Schaumwerkstoffs erstrecken. Die Verstärkungselemente können in die Durchgangslöcher eingesteckt werden. Beispielsweise können derartige Durchgangslöcher durch Bohren oder dergleichen erzeugt werden. Vorteilhafterweise müssen die Verstärkungselemente in diesem Fall im Anschluss lediglich noch in die Durchgangslöcher eingeschoben werden.

Die Durchgangslöcher können durch Aufschmelzen des Schaumwerkstoffs geformt werden. Diese Weiterbildung hat den Vorteil, dass das Schaumstoffmaterial hierbei nicht entfernt wird, sondern lediglich aufgeschmolzen wird. Dies führt zu einer lokalen Dichteerhöhung an den Seitenwänden des jeweiligen Durchgangslochs, was wiederum Vorteile für eine Stützung der Verstärkungselemente gegen Ausknicken hat.

Der Schaumwerkstoff kann hierbei mit einem Laser aufgeschmolzen werden. Mittels eines Lasers können die Durchgangslöcher besonders praktisch und gleichzeitig präzise eingeschmolzen werden.

Gemäß einer Weiterbildung können die Verstärkungselemente zumindest an jeweils einem Endbereich angespitzt sein. Die Verstärkungselemente dienen in dieser Weiterbildung gewissermaßen als Bohrer oder Bohrköpfe bzw. Nadeln, welche in den Schaumwerkstoff eindringen und dabei Schaumstoffmaterial verdrängen. Hierbei können die Verstärkungselemente alleine aufgrund ihrer Form und/oder aufgrund von Reibung in der Position bleiben.

Derart können die Durchgangslöcher durch Perforieren des Schaumwerkstoffs mit den angespitzten Endbereichen der Verstärkungselemente geformt werden. Die Verstärkungselemente können beispielsweise händisch oder maschinell in den Schaumwerkstoff eingeführt werden.

Gemäß einer Weiterbildung können die Endbereiche der Verstärkungselemente aus der ersten Deckfläche und der zweiten Deckfläche gleichmäßig herausragen. Die Anbindung der Deckschichten kann in dieser Weiterbildung besonders gleichmäßig und eben erreicht werden.

Gemäß einer Weiterbildung können die in den Schaumwerkstoff eingebrachten Verstärkungselemente mittels Reibschluss in dem Schaumwerkstoff fixiert sein. Die Verstärkungselemente sind somit während der Herstellung des verstärkten Schaumstoffkerns gewissermaßen von selbst in der Position fixiert, bis sie mit dem Schaumwerkstoff verschmolzen werden. Grundsätzlich kann es jedoch auch vorgesehen sein, dass die Verstärkungselemente über eine externe Vorrichtung oder andere Hilfsmittel in ihren Positionen während der Herstellung des verstärkten Schaumstoffkerns fixiert werden.

Gemäß einer Weiterbildung kann das beidseitige Laminieren der thermoplastischen Deckschichten auf den verstärkten Schaumstoffkern die Beaufschlagung mit Temperatur und Druck für das Thermoformen vermittelt werden. Die Verbindung der Verstärkungselemente, des Schaumwerkstoffs und der Deckschichten kann in dieser Weiterbildung somit vorteilhafterweise in einem Schritt realisiert werden. Durch Aufheizen der Deckschichten kann genügend Wärmeenergie geliefert werden, um die Verstärkungselemente und die Oberfläche des Schaumwerkstoffs aufzuschmelzen, sodass eine Schmelzfügung erreichbar ist.

Gemäß einer Weiterbildung kann das Thermoformen und/oder das beidseitige Laminieren vermittels einer Presse durchgeführt werden. Grundsätzlich kann eine solche Presse auch lediglich lokal zur Beaufschlagung mit Druck und Temperatur eingesetzt werden, beispielsweise um bestimmte Bereiche mit einer spezifischen Dichte von Verstärkungselemente zu bearbeiten. Andere Bereiche können wiederum alternativ oder zusätzlich mit anderen Verfahren und/oder händisch bearbeitet werden Ein verwendetes Werkzeug könnte beispielsweise einer Punktschweißzange ähneln. Grundsätzlich kann beispielsweise ein Formwerkzeug zum Einsatz kommen, um den Schaumwerkstoff zusammen mit den Verstärkungselementen in eine gewünschte Form zu bringen. Die aus dem Schaumwerkstoff hervorstehenden Verstärkungselemente können hierbei erwärmt und umgeformt bzw. komprimiert werden, sodass eine Art Wulst vergleichbar einem Niet an den Endbereichen der Verstärkungselemente entsteht. Um eine ebene Oberfläche zu bilden, kann diese Wulst im Anschluss in den Schaumwerkstoff hinein gepresst werden und mit diesem verschmolzen werden.

Gemäß einer Weiterbildung können die Verstärkungselemente, der Schaumwerkstoff und/oder die Deckschichten jeweils einen thermoplastischen Kunststoff enthalten.

Gemäß einer Weiterbildung können die Verstärkungselemente, der Schaumwerkstoff und die Deckschichten den gleichen thermoplastischen Kunststoff enthalten.

Gemäß einer Weiterbildung können die Verstärkungselemente und/oder die Deckschichten Verstärkungsfasern enthalten, welche in den jeweiligen thermoplastischen Kunststoff eingebettet sind. Beispielsweise können die Deckschichten mit einem hohen Faservolumenanteil ausgebildet sein, sodass nur wenig schmelzfähiger Kunststoff an der Oberfläche für eine Schmelzfügung zur Verfügung steht. Hierbei kann das zusätzliche Material der Verstärkungselemente und/oder des Schaumwerkstoffs vorteilhaft sein, wodurch genügend schmelzfähiges Material für eine Schmelzfügung zur Verfügung gestellt werden kann.

Gemäß einer Weiterbildung kann der jeweilige thermoplastische Kunststoff aus der Gruppe bestehend aus ABS (Acrynitril-Butadien-Styrol), PA (Polyamid), PBT (Polybutylenterephthalat), PC (Polycarbonat), PEEK (Polyetheretherketon), PEI (Polyetherimid), PES (Polyethersulfon), PET (Polyethyleneterephthalat), PP (Polypropylen), PPS (Polyphenylensulfid), PPSU (Polyphenylsulfon) und PSU (Polysulfon) oder dergleichen ausgewählt sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1a bis 1c: schematische Querschnittsansichten eines Sandwich-Paneels mit einem verstärkten Schaumstoffkern während der Herstellung mit einem Verfahren gemäß einer Ausführungsform der Erfindung; und
- Fig. 2: ein schematisches Ablaufdiagramm eines Verfahrens wie es in Fig. 1a bis 1c verwendet wird.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleich wirkende Elemente, Merkmale und Komponenten - sofern nichts anderes ausgeführt ist - jeweils mit denselben Bezugszeichen versehen.

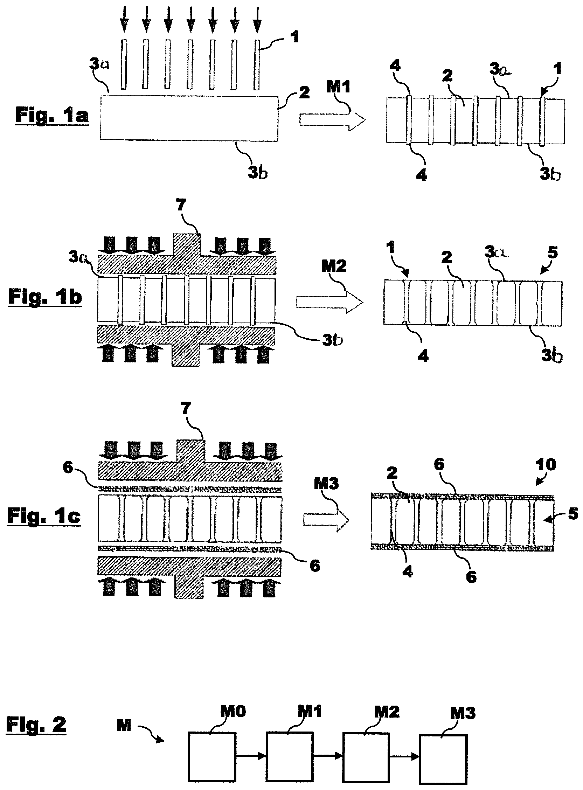

Die Figuren 1a bis 1c zeigen schematische Querschnittsansichten eines Sandwich-Paneels 10 mit einem verstärkten Schaumstoffkern 5 während der Herstellung mit einem Verfahren M gemäß einer Ausführungsform der Erfindung. Fig. 2 zeigt allgemein ein schematisches Ablaufdiagramm eines solchen Verfahrens M zur Herstellung eines derartigen Sandwich-Paneels 10.

Das Sandwich-Panee! 10 umfasst grundlegend einen verstärkten Schaumstoffkern 5 mit einem thermoplastischen Schaumwerkstoff 2 mit einer ersten Deckfläche 3a und einer zweiten Deckfläche 3b, wobei der Schaumwerkstoff 2 von einer Vielzahl von stabförmigen thermoplastischen Verstärkungselementen 1 in Dickenrichtung, d.h. von der ersten Deckfläche 3a hin zu der zweiten Deckfläche 3b, durchsetzt ist. Der verstärkte Schaumstoffkern 5 ist an den Deckflächen 3a, 3b beidseitig mit jeweils einer thermoplastischen Deckschicht 6 abgeschlossen. Ein derartiges Sandwich-Paneel 10 kann beispielsweise zur Verkleidung einer Wand oder Decke einer Passagierkabine eines Luftfahrzeugs genutzt werden. Weitere Anwendungen solcher Paneele umfassen Fußbodenplatten, Abdeckungsplatten usw.

Die Verstärkungselemente 1, der Schaumwerkstoff 2 und/oder die Deckschichten 6 können jeweils einen oder mehrere thermoplastische Kunststoffe enthalten. Die thermoplastischen Kunststoffe können hierbei gleich oder unterschiedlich sein. Insbesondere kann der Schaumwerkstoff 2 vollständig oder im Wesentlichen aus einem solchen thermoplastischen Kunststoff bestehen. Grundsätzlich können auch die Verstärkungselemente 1 sowie die Deckschichten 6 im Wesentlichen oder vollständig aus einem solchen thermoplastischen Kunststoff bestehen. Je nach Anwendung kann der thermoplastische Kunststoff aus der Gruppe bestehend aus ABS (Acrynitril-Butadien-Styrol), PA (Polyamid), PBT (Polybutylenterephthalat), PC (Polycarbonat), PEEK (Polyetheretherketon), PEI (Polyetherimid), PES (Polyethersulfon), PET (Polyethyleneterephthalat), PP (Polypropylen), PPS (Polyphenylensulfid), PPSU (Polyphenylsulfon) und PSU (Polysulfon) oder dergleichen ausgewählt sein. Speziell im Bereich der Luft- und Raumfahrtindustrie sind Thermoplastmaterialien wie beispielsweise PEEK, PEI, PES, PPS, PPSU oder PSU vorteilhaft.

Darüber hinaus können die Verstärkungselemente 1 und/oder die Deckschichten 6 jedoch auch Verstärkungsfasern enthalten, welche in den jeweiligen thermoplastischen Kunststoff eingebettet sind. Verstärkungsfasern können beispielsweise Kohlenstofffasern, Glasfasern, Aramidfasern oder dergleichen umfassen. Ein stabförmiges Verstärkungselement 1 kann demnach beispielsweise eine Vielzahl von Verstärkungsfasern aufweisen, welche in eine Matrix aus thermoplastischem Kunststoff eingebettet ist, z.B. Kohlenstofffasern in einer Matrix aus PEEK oder dergleichen. Ein solches Verstärkungselement 1 bildet demnach eine Art von rigidem Pin. Der thermoplastische Kunststoff des Pins kann durch Temperatureinwirkung aufgeschmolzen werden. Grundsätzlich können unterschiedliche Ausführungen der Pins bzw. der Verstärkungselemente 1 vorgesehen sein, welche in einem Sandwich-Paneel 10 miteinander kombiniert sein können. Beispielsweise sind Varianten mit oder ohne Faserverstärkung, mit oder ohne Orientierung derselben sowie verschiedenen Faserlängen von kurz bis endlos vorgesehen. Die Kunststoffmatrix der Verstärkungselemente 1 kann aus dem gleichen oder einem anderen Kunststoff wie der Schaumwerkstoff 2 bestehen, wobei eine Mischbarkeit der verwendeten Kunststoffe auf Molekularebene zur Bildung einer stoffschlüssigen Verbindung vorausgesetzt wird. Die Verstärkungselemente 1 können einen kreisförmigen oder anderen Querschnitt aufweisen. Die Verstärkungselemente 1 in den Figuren werden lediglich beispielhaft in einem Winkel von 0° eingebracht. Es sind jedoch auch andere Winkel möglich, die für bestimmte Belastungsrichtungen von Vorteil sein können. Verstärkungselemente 1 können insbesondere auch in verschiedenen unterschiedlichen Winkeln eingebracht werden, z.B. unterschiedliche Einbringungswinkel zwischen 0° und 75°.

Das Verfahren M umfasst unter M1 Einbringen einer Vielzahl von stabförmigen, thermoplastischen Verstärkungselementen 1 in einen thermoplastischen Schaumwerkstoff 2 derart, dass sich die Verstärkungselemente 1 von einer ersten Deckfläche 3a des Schaumwerkstoffs 2 durch den Schaumwerkstoff 2 hindurch zu einer zweiten Deckfläche 3b des Schaumwerkstoffs 2 erstrecken. Hierbei ragen Endbereiche 4 der Verstärkungselemente 1 aus der ersten Deckfläche 3a und der zweiten Deckfläche 3b heraus. Vorausgehend zu dem Einbringen der stabförmigen, thermoplastischen Verstärkungselemente kann das Verfahren M optional unter M0 Formen einer Vielzahl von Durchgangslöchern 6 in dem Schaumwerkstoff 2 umfassen (in Fig. 1a bis 1c nicht dargestellt), welche sich von der ersten Deckfläche 3a des Schaumwerkstoffs 2 zu der zweiten Deckfläche 3b des Schaumwerkstoffs 2 erstrecken. In diesem Fall können die Verstärkungselemente 1 einfach in die Durchgangslöcher 6 eingesteckt werden. Die Durchgangslöcher 6 können hierbei beispielsweise durch Bohren oder Aufschmelzen des Schaumwerkstoffs 2 geformt werden, z.B. mit einem Laser, einem Teilchenstrahl oder einem anderen entsprechenden Hilfsmittel mit dem Energie gebündelt zur Aufschmelzung von Löchern erzeugt werden kann. Alternativ oder zusätzlich kann es jedoch auch vorgesehen sein, dass Durchgangslöcher 6 durch Perforieren des Schaumwerkstoffs 2 mit den Verstärkungselementen 1 geformt werden. Hierfür können die Verstärkungselemente 1 beispielsweise angespitzte Endbereiche 4 aufweisen, welche dann entsprechend als Nadel oder Bohrkopf fungieren. Nach diesen Verfahrensschritten können die in den Schaumwerkstoff 2 eingebrachten Verstärkungselemente 1 vorübergehend beispielsweise mittels Reibschluss in dem Schaumwerkstoff 2 fixiert sein. Alternativ oder zusätzlich können Verstärkungselemente 1 jedoch ebenso über eine externe Vorrichtung oder andere Hilfsmittel in ihren Positionen gehalten werden. Beispielsweise können die Verstärkungselemente 1 mit einer Maschine in den Schaumwerkstoff 2 eingeführt werden und von eben dieser Maschine dort festgehalten werden.

Das Verfahren M umfasst ferner unter M2 Thermoformen des Schaumwerkstoffs 2 mit den Verstärkungselementen 1 zu einem verstärkten Schaumstoffkern 5. Hierbei werden die Endbereiche 4 der Verstärkungselemente 1 durch Beaufschlagung von Temperatur und Druck an die Deckflächen 3a, 3b des Schaumwerkstoffs 2 angeformt und in einer Schmelzverbindung mit dem Schaumwerkstoff 2 stoffschlüssig verbunden, d.h. das Verfahren beinhaltet Schmelzverbinden der Verstärkungselemente 1 und des Schaumwerkstoffs 2. Hierbei kann beispielsweise ein Formwerkzeug zum Einsatz kommen, um den Schaumwerkstoff 2 zusammen mit den Verstärkungselementen 1 in eine gewünschte Form zu bringen. Weiterhin umfasst das Verfahren M unter M3 beidseitiges Laminieren jeweils einer thermoplastischen Deckschicht 6 unter Beaufschlagung von Temperatur und Druck auf den verstärkten Schaumstoffkern 5 an den Deckflächen 3a, b' des Schaumwerkstoffs 2 zur Bildung des Sandwich-Paneels 10. Die Deckschichten 6 werden hierbei in einer Schmelzverbindung stoffschlüssig mit dem verstärkten Schaumstoffkern 5 verbunden, d.h. das Verfahren beinhaltet Schmelzverbinden der Deckschichten 6 und des verstärkten Schaumstoffkerns 5. Das Thermoformen und/oder das beidseitige Laminieren kann vermittels einer Presse 7 durchgeführt werden. Insbesondere kann das beidseitige Laminieren der thermoplastischen Deckschichten 6 auf den verstärkten Schaumstoffkern 5 die Beaufschlagung mit Temperatur und Druck für das Thermoformen vermitteln. Fig. 1b und 1c zeigen hier beispielhaft eine Ausführungsform des Verfahrens M, bei welchem sowohl das Thermoformen (Fig. 1b) als auch das Laminieren (Fig. 1c) mittels einer Presse 7 in separaten Schritten durchgeführt werden. Die Presse 7 beaufschlagt die entsprechenden Komponenten hierbei mit Druck und Temperatur (siehe Pfeile in Fig. 1b und 1c). Grundsätzlich können beide Vorgänge jedoch auch in einem Verfahrensschritt durchgeführt werden, indem die Presse 7 die Deckschichten 6 derart mit Temperatur und Druck beaufschlagt, dass diese beim Anpressen an die Deckflächen 3a, 3b des Schaumwerkstoffs 2 mit den darin eingebrachten Verstärkungselementen 1 genügend Wärmeenergie an den Schaumwerkstoff 2 und die Endbereiche 4 der Verstärkungselemente 1 weiterleitet, so dass diese zumindest im Bereich der Oberfläche aufgeschmolzen werden. Die aus dem Schaumwerkstoff 2 hervorstehenden Verstärkungselemente 1 werden hierbei erwärmt und umgeformt, sodass eine Art Wulst vergleichbar einem Niet an den Endbereichen der Verstärkungselemente 1 entsteht (siehe Fig. 1b). Um eine ebene Oberfläche zu bilden, wird diese Wulst im Anschluss in den Schaumwerkstoff 2 hinein gepresst werden und mit diesem verschmolzen.

Mit dem erfindungsgemäßen Verfahren könne derart somit Sandwich-Paneele 10 mit einem verstärkten Schaumstoffkern 5 aus thermoplastischen Kunststoffen geformt werden. Üblicherweise werden lediglich duromere Schaumstoffe für die Herstellung von Sandwich-Paneelen verwendet, z.B. "Tied-Foam-Core"-Verfahren oder ähnliche Verfahren, bei welchen trockene Fasern in einen duromeren Schaumwerkstoff eingeführt werden und im Anschluss mit einer Kunststoffmatrix infiltriert werden. Mit dem vorliegenden Verfahren ist es nun möglich, thermoplastische Sandwich-Paneele mit vergleichbaren mechanischen Eigenschaften wie duromere Sandwich-Paneele oder Sandwich-Paneele mit einem Wabenkern herzustellen. Beispielsweise kann mittels der Verstärkungselemente 1 die Druck- und Scherfestigkeit der Sandwich-Paneele optimiert werden.

Darüber hinaus bieten die verwendeten thermoplastischen Kunststoffe jedoch eine Vielzahl von Vorteilen, insbesondere sind diese sehr leicht und unkompliziert fast beliebig formbar. Im Unterschied hierzu sind beispielsweise Honigwabenstrukturen maschinell nur sehr aufwendig zu handhaben, so dass häufig auf eine händische Verarbeitung zurückgegriffen wird. Gleichzeitig sind in diesem Fall mehrfach gekrümmte Strukturen kaum zu realisieren. Generell ist die Herstellung von solchen Honigwaben-Paneelen extrem aufwendig. Günstigere Verarbeitungseigenschaften und eine größere Vielfalt bei der Formgebung bieten Sandwich-Strukturen mit Kernen aus geschäumten Polymeren. Diese können in nahezu jede erdenkliche Form gebracht werden. Schaumwerkstoffe aus thermoplastischen Kunststoffen gemäß der vorliegenden Erfindung können außerdem unter Druck und Temperatur beliebig verformt werden und in kurzen Zykluszeiten mit thermoplastischen Deckschichten gefügt werden. Somit eröffnen die vorliegenden Verfahren eine Herstellung von komplexe geformten Sandwich-Strukturen auch in kurzen Zykluszeiten.

Die beschriebenen Verfahren und Sandwich-Paneele können in allen Bereichen der Transportindustrie, beispielsweise für Luftfahrzeuge, Straßenkraftfahrzeuge, für Schienenfahrzeuge oder für Wasserfahrzeuge eingesetzt werden. Darüber hinaus sind derartige Sandwich-Paneele in vielfältigen anderen Bereichen einsetzbar, z.B. in der Bau- und Möbelindustrie etc.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Verstärkungselemente
- 2: Schaumwerkstoff
- 3a: erste Deckfläche
- 3b: zweite Deckfläche
- 3: Endbereich
- 4: verstärkter Schaumstoffkern
- 6: Deckschicht
- 7: Presse
- 10: Sandwich-Paneel
- M: Verfahren
- M0: Verfahrensschritt
- M1: Verfahrensschritt
- M2: Verfahrensschritt
- M3: Verfahrensschritt

## Patentansprüche

1. Verfahren (M) zur Herstellung eines Sandwich-Paneels (10) mit einem verstärkten Schaumstoffkern (5), mit folgenden Verfahrensschritten:
Einbringen (M1) einer Vielzahl von stabförmigen, thermoplastischen Verstärkungselementen (1) in einen thermoplastischen Schaumwerkstoff (2) derart, dass sich die Verstärkungselemente (1) von einer ersten Deckfläche (3a) des Schaumwerkstoffs (2) durch den Schaumwerkstoff (2) hindurch zu einer zweiten Deckfläche (3b) des Schaumwerkstoffs (2) erstrecken, wobei Endbereiche (4) der Verstärkungselemente (1) aus der ersten Deckfläche (3a) und der zweiten Deckfläche (3b) herausragen;
Thermoformen (M2) des Schaumwerkstoffs (2) mit den Verstärkungselementen (1) zu einem verstärkten Schaumstoffkern (5), wobei die Endbereiche (4) der Verstärkungselemente (1) durch Beaufschlagung von Temperatur und Druck an die Deckflächen (3a, 3b) des Schaumwerkstoffs (2) angeformt und in einer Schmelzverbindung mit dem Schaumwerkstoff (2) stoffschlüssig verbunden werden; und
beidseitiges Laminieren (M3) jeweils einer thermoplastischen Deckschicht (6) unter Beaufschlagung von Temperatur und Druck auf den verstärkten Schaumstoffkern (5) an den Deckflächen (3a, 3b) des Schaumwerkstoffs (2) zur Bildung des Sandwich-Paneels (10), wobei die Deckschichten (6) in einer Schmelzverbindung stoffschlüssig mit dem verstärkten Schaumstoffkern (5) verbunden werden.

2. Verfahren (M) nach einem der vorstehenden Ansprüche, weiterhin den folgenden Verfahrensschritten aufweisend:
Formen (M0) einer Vielzahl von Durchgangslöchern (6) in dem Schaumwerkstoff (2), welche sich von der ersten Deckfläche (3a) des Schaumwerkstoffs (2) zu der zweiten Deckfläche (3b) des Schaumwerkstoffs (2) erstrecken, wobei die Verstärkungselemente (1) in die Durchgangslöcher (6) eingesteckt werden.

3. Verfahren (M) nach Anspruch 2, wobei die Durchgangslöcher (6) durch Aufschmelzen des Schaumwerkstoffs (2) geformt werden.

4. Verfahren (M) nach Anspruch 3, wobei der Schaumwerkstoff (2) mit einem Laser aufgeschmolzen wird.

5. Verfahren (M) nach Anspruch 1, wobei die Verstärkungselemente (1) zumindest an jeweils einem Endbereich angespitzt sind.

6. Verfahren (M) nach Anspruch 5, wobei die Durchgangslöcher (6) durch Perforieren des Schaumwerkstoffs (2) mit den angespitzten Endbereichen (4) der Verstärkungselemente (1) geformt werden.

7. Verfahren (M) nach einem der vorstehenden Ansprüche, wobei die Endbereiche (4) der Verstärkungselemente (1) aus der ersten Deckfläche (3a) und der zweiten Deckfläche (3b) gleichmäßig herausragen.

8. Verfahren (M) nach einem der vorstehenden Ansprüche, wobei die in den Schaumwerkstoff (2) eingebrachten Verstärkungselemente (1) mittels Reibschluss in dem Schaumwerkstoff (2) fixiert sind.

9. Verfahren (M) nach einem der vorstehenden Ansprüche, wobei das beidseitige Laminieren (M3) der thermoplastischen Deckschichten (6) auf den verstärkten Schaumstoffkern (5) die Beaufschlagung mit Temperatur und Druck für das Thermoformen (M2) vermittelt.

10. Verfahren (M) nach einem der vorstehenden Ansprüche, wobei das Thermoformen (M2) und/oder das beidseitige Laminieren (M3) vermittels einer Presse (7) durchgeführt wird.

11. Verfahren (M) nach einem der vorstehenden Ansprüche, wobei die Verstärkungselemente (1), der Schaumwerkstoff (2) und/oder die Deckschichten (6) jeweils einen thermoplastischen Kunststoff enthalten.

12. Verfahren (M) nach Anspruch 11, wobei die Verstärkungselemente (1), der Schaumwerkstoff (2) und die Deckschichten (6) den gleichen thermoplastischen Kunststoff enthalten.

13. Verfahren (M) nach Anspruch 11 oder 12, wobei die Verstärkungselemente (1) und/oder die Deckschichten (6) Verstärkungsfasern enthalten, welche in den jeweiligen thermoplastischen Kunststoff eingebettet sind.

14. Verfahren (M) nach einem der Ansprüche 11 bis 13, wobei der jeweilige thermoplastische Kunststoff aus der Gruppe bestehend aus Acrynitril-Butadien-Styrol, Polyamid, Polybutylenterephthalat, Polycarbonat, Polyetheretherketon, Polyetherimid, Polyethersulfon, Polyethyleneterephthalat, Polypropylen, Polyphenylensulfid, Polyphenylsulfon und Polysulfon ausgewählt ist.

15. Sandwich-Paneel (10), mit:
einem thermoplastischen Schaumwerkstoff (2);
einer Vielzahl von stabförmigen, thermoplastischen Verstärkungselementen (1), welche in den thermoplastischen Schaumwerkstoff (2) eingebracht sind, wobei sich die Verstärkungselemente (1) von einer ersten Deckfläche (3a) des Schaumwerkstoffs (2) durch den Schaumwerkstoff (2) hindurch zu einer zweiten Deckfläche (3b) des Schaumwerkstoffs (2) erstrecken; und
jeweils einer Deckschicht (6) beidseitig des verstärkten Schaumstoffkerns (5);
wobei Endbereiche (4) der Verstärkungselemente (1) an die Deckflächen (3a, 3b) des Schaumwerkstoffs (2) angeformt und in einer Schmelzverbindung mit dem Schaumwerkstoff (2) stoffschlüssig verbunden sind, sodass der Schaumwerkstoff (2) mit den Verstärkungselementen (1) einen verstärkten Schaumstoff kern (5) bildet, **dadurch gekennzeichnet, dass** die Deckschichten (6) aus einem thermoplastischen Material gefertigt sind und an den Deckflächen (3a, 3b) des Schaumwerkstoffs (2) auf den verstärkten Schaumstoffkern (5) laminiert und in einer Schmelzverbindung stoffschlüssig mit dem verstärkten Schaumstoffkern (5) verbunden sind.

## Claims

1. Method (M) for producing a sandwich panel (10) with a reinforced foam core (5), comprising the following method steps:
introducing (M1) a multiplicity of rod-shaped, thermoplastic reinforcing elements (1) into a thermoplastic foam material (2) in such a way that the reinforcing elements (1) extend through the foam material (2) from a first outer surface (3a) of the foam material (2) to a second outer surface (3b) of the foam material (2), wherein end regions (4) of the reinforcing elements (1) protrude out of the first outer surface (3a) and the second outer surface (3b);
thermoforming (M2) the foam material (2) with the reinforcing elements (1) to afford a reinforced foam core (5), wherein the end regions (4) of the reinforcing elements (1) are formed onto the outer surfaces (3a, 3b) of the foam material (2) as a result of the application of temperature and pressure and connected in a materially bonded manner to the foam material (2) in a fused connection; and
laminating (M3) a respective thermoplastic outer layer (6) onto both sides of the reinforced foam core (5) on the outer surfaces (3a, 3b) of the foam material (2) with the application of temperature and pressure to form the sandwich panel (10), wherein the outer layers (6) are connected in a materially bonded manner to the reinforced foam core (5) in a fused connection.

2. Method (M) according to one of the preceding claims, furthermore comprising the following method step:
forming (M0) a multiplicity of through-holes (6) in the foam material (2) which extend from the first outer surface (3a) of the foam material (2) to the second outer surface (3b) of the foam material (2), wherein the reinforcing elements (1) are pushed into the through-holes (6).

3. Method (M) according to Claim 2, wherein the through-holes (6) are formed by melting the foam material (2) .

4. Method (M) according to Claim 3, wherein the foam material (2) is melted by means of a laser.

5. Method (M) according to Claim 1, wherein the reinforcing elements (1) are pointed at least in a respective end region.

6. Method (M) according to Claim 5, wherein the through-holes (6) are formed by perforating the foam material (2) with the pointed end regions (4) of the reinforcing elements (1).

7. Method (M) according to one of the preceding claims, wherein the end regions (4) of the reinforcing elements (1) protrude uniformly out of the first outer surface (3a) and the second outer surface (3b).

8. Method (M) according to one of the preceding claims, wherein the reinforcing elements (1) introduced into the foam material (2) are fixed in the foam material (2) by means of frictional engagement.

9. Method (M) according to one of the preceding claims, wherein the laminating (M3) of the thermoplastic outer layers (6) onto both sides of the reinforced foam core (5) provides the application of temperature and pressure for the thermoforming (M2).

10. Method (M) according to one of the preceding claims, wherein the thermoforming (M2) and/or the laminating (M3) on both sides is carried out by means of a press (7) .

11. Method (M) according to one of the preceding claims, wherein the reinforcing elements (1), the foam material (2) and/or the outer layers (6) each contain a thermoplastic material.

12. Method (M) according to Claim 11, wherein the reinforcing elements (1), the foam material (2) and the outer layers (6) contain the same thermoplastic material.

13. Method (M) according to Claim 11 or 12, wherein the reinforcing elements (1) and/or the outer layers (6) contain reinforcing fibres, which are embedded in the respective thermoplastic material.

14. Method (M) according to one of Claims 11 to 13, wherein the respective thermoplastic material is selected from the group consisting of acrylonitrile butadiene styrene, polyamide, polybutylene terephthalate, polycarbonate, polyether ether ketone, polyetherimide, polyethersulfone, polyethylene terephthalate, polypropylene, polyphenylene sulfide, polyphenylsulfone and polysulfone.

15. Sandwich panel (10), comprising:
a thermoplastic foam material (2);
a multiplicity of rod-shaped, thermoplastic reinforcing elements (1) which are introduced in the thermoplastic foam material (2), wherein the reinforcing elements (1) extend through the foam material (2) from a first outer surface (3a) of the foam material (2) to a second outer surface (3b) of the foam material (2); and
a respective outer layer (6) on both sides of the reinforced foam core (5);
wherein end regions (4) of the reinforcing elements (1) are formed onto the outer surfaces (3a, 3b) of the foam material (2) and connected in a materially bonded manner to the foam material (2) in a fused connection, with the result that the foam material (2) with the reinforcing elements (1) forms a reinforced foam core (5), **characterized in that** the outer layers (6) are manufactured from a thermoplastic material and are laminated onto the reinforced foam core (5) on the outer surfaces (3a, 3b) of the foam material (2) and connected in a materially bonded manner to the reinforced foam core (5) in a fused connection.

## Revendications

1. Procédé (M) de fabrication d'un panneau en sandwich (10) comprenant un noyau en mousse renforcé (5), comprenant les étapes de procédé suivantes :
l'introduction (M1) d'une pluralité d'éléments de renforcement thermoplastiques en forme de tiges (1) dans une matière en mousse thermoplastique (2), de telle sorte que les éléments de renforcement (1) s'étendent d'une première surface de recouvrement (3a) de la matière en mousse (2) à travers la matière en mousse (2) jusqu'à une deuxième surface de recouvrement (3b) de la matière en mousse (2), des zones d'extrémité (4) des éléments de renforcement (1) dépassant de la première surface de recouvrement (3a) et de la deuxième surface de recouvrement (3b) ;
le thermoformage (M2) de la matière en mousse (2) comprenant les éléments de renforcement (1) en un noyau en mousse renforcé (5), les zones d'extrémité (4) des éléments de renforcement (1) étant conformées sur les surfaces de recouvrement (3a, 3b) de la matière en mousse (2) par sollicitation en température et pression, et reliées par accouplement de matière dans une liaison de fusion avec la matière en mousse (2) ; et
la stratification des deux côtés (M3) à chaque fois d'une couche de recouvrement thermoplastique (6) avec sollicitation en température et pression sur le noyau en mousse renforcé (5) sur les surfaces de recouvrement (3a, 3b) de la matière en mousse (2) pour la formation du panneau en sandwich (10), les couches de recouvrement (6) étant reliées dans une liaison de fusion par accouplement de matière avec le noyau en mousse renforcé (5).

2. Procédé (M) selon l'une quelconque des revendications précédentes, comprenant en outre les étapes de procédé suivantes :
la formation (M0) d'une pluralité de trous de passage (6) dans la matière en mousse (2), qui s'étendent de la première surface de recouvrement (3a) de la matière en mousse (2) jusqu'à la deuxième surface de recouvrement (3b) de la matière en mousse (2), les éléments de renforcement (1) étant insérés dans les trous de passage (6).

3. Procédé (M) selon la revendication 2, dans lequel les trous de passage (6) sont formés par fusion de la matière en mousse (2).

4. Procédé (M) selon la revendication 3, dans lequel la matière en mousse (2) est fondue avec un laser.

5. Procédé (M) selon la revendication 1, dans lequel les éléments de renforcement (1) sont chacun taillés au niveau d'au moins une zone d'extrémité.

6. Procédé (M) selon la revendication 5, dans lequel les trous de passage (6) sont formés par perforation de la matière en mousse (2) avec les zones d'extrémité taillées (4) des éléments de renforcement (1).

7. Procédé (M) selon l'une quelconque des revendications précédentes, dans lequel les zones d'extrémité (4) des éléments de renforcement (1) dépassent uniformément de la première surface de recouvrement (3a) et de la deuxième surface de recouvrement (3b).

8. Procédé (M) selon l'une quelconque des revendications précédentes, dans lequel les éléments de renforcement (1) introduits dans la matière en mousse (2) sont fixés dans la matière en mousse (2) par engagement par friction.

9. Procédé (M) selon l'une quelconque des revendications précédentes, dans lequel la stratification des deux côtés (M3) des couches de recouvrement thermoplastiques (6) sur le noyau en mousse renforcé (5) fournit la sollicitation en température et pression pour le thermoformage (M2).

10. Procédé (M) selon l'une quelconque des revendications précédentes, dans lequel le thermoformage (M2) et/ou la stratification des deux côtés (M3) sont réalisés au moyen d'une presse (7).

11. Procédé (M) selon l'une quelconque des revendications précédentes, dans lequel les éléments de renforcement (1), la matière en mousse (2) et/ou les couches de recouvrement (6) contiennent chacun une matière plastique thermoplastique.

12. Procédé (M) selon la revendication 11, dans lequel les éléments de renforcement (1), la matière en mousse (2) et les couches de recouvrement (6) contiennent la même matière plastique thermoplastique.

13. Procédé (M) selon la revendication 11 ou 12, dans lequel les éléments de renforcement (1) et/ou les couches de recouvrement (6) contiennent des fibres de renforcement, qui sont incorporées dans la matière plastique thermoplastique respective.

14. Procédé (M) selon l'une quelconque des revendications 11 à 13, dans lequel la matière plastique thermoplastique respective est choisie dans le groupe constitué par l'acrylonitrile-butadiène-styrène, le polyamide, le polybutylène téréphtalate, le polycarbonate, la polyétheréthercétone, le polyétherimide, la polyéthersulfone, le polyéthylène téréphtalate, le polypropylène, le polysulfure de phénylène, la polyphénylsulfone et la polysulfone.

15. Panneau en sandwich (10), comprenant :
une matière en mousse thermoplastique (2) ;
une pluralité d'éléments de renforcement thermoplastiques en forme de tiges (1), qui sont introduits dans la matière en mousse thermoplastique (2), les éléments de renforcement (1) s'étendant d'une première surface de recouvrement (3a) de la matière en mousse (2) à travers la matière en mousse (2) jusqu'à une deuxième surface de recouvrement (3b) de la matière en mousse (2) ; et
à chaque fois une couche de recouvrement (6) des deux côtés du noyau en mousse renforcé (5) ;
les zones d'extrémité (4) des éléments de renforcement (1) étant conformées sur les surfaces de recouvrement (3a, 3b) de la matière en mousse (2), et reliées par accouplement de matière dans une liaison de fusion avec la matière en mousse (2), de telle sorte que la matière en mousse (2) forme un noyau en mousse renforcé (5) avec les éléments de renforcement (1), **caractérisé en ce que** les couches de recouvrement (6) sont fabriquées en un matériau thermoplastique et sont stratifiées sur les surfaces de recouvrement (3a, 3b) de la matière en mousse (2) sur le noyau en mousse renforcé (5), et sont reliées dans une liaison de fusion par accouplement de matière avec le noyau en mousse renforcé (5).
